# EUROPÄISCHE PATENTANMELDUNG

(11) **EP 0 749 918 A1**
(43) Veröffentlichungstag der Anmeldung: **27.12.1996**
(21) Anmeldenummer: 95810663.5
(22) Anmeldetag: 26.10.1995
(51) Int. Cl.: B65G 45/12, B65G 45/16

(54) **Abstreifer**

(30) Priorität: 21.06.1995 CH 1821/95
(71) Anmelder: GUMMI-HUBER INDUSTRIEBEDARF AG, CH-9322 Egnach (CH)
(72) Erfinder: Huber, David, CH-9322 Egnach (CH); Huber, René, CH-9322 Egnach (CH)
(74) Vertreter: Kulhavy, Sava, Dipl.-Ing.

(57) **Zusammenfassung**

Der Abstreifer für einen Bandförderer, dessen Fördergurt (1) über Gurttrommeln (2) umlenkbar ist, weist Schaber (20) auf, deren Schabkanten (22) am Fördergurt anliegen und praktisch quer zur Längsrichtung des Fördergurtes verlaufen. Die Schabkante (22) des jeweiligen Schabers (20) ist im mittleren Bereich des Umschlingungswinkels der Gurttrommel (2) angeordnet. Die Schabkante befindet sich zugleich unterhalb einer horizontalen Ebene (X), in welcher die Achse (0) der Gurttrommel (2) liegt, wobei der Abstand (A) zwischen dieser Horizontalebene (X) und der Schabkante (22) beispielsweise 10 mm betragen kann.

## Beschreibung

Die vorliegende Erfindung betrifft einen Abstreifer für einen Bandförderer, dessen Fördergurt über Gurttrommeln umlenkbar ist, wobei die Umschlingung der Gurttrommel durch einen Umschlingungswinkel definiert ist, mit zumindest einem am Fördergurt anliegenden Schaber, dessen Schabkante praktisch quer zur Längsrichtung des Fördergurtes verläuft.

Solche Abstreifer sind bereits bekannt und sie befinden sich meistens im Bereich der Kopftrommel des Bandförderers. Einer dieser bekannten Abstreifer weist mehrere nebeneinander angeordnete und sich teilweise überlappende Schaber auf, welche sich unterhalb der Kopftrommel befinden. Dies bedeutet, dass diese vorbekannten Schaber sich im Bereich des unteren Endes des Umschlingungswinkels befinden.

Jeder Schaber weist eine Schabplatte auf, welche etwa senkrecht zum Fördergurt steht. Die Schabplatten der benachbarten Schaber überlappen sich teilweise. Die dem Fördergurt zugeordnete schmale Seite der Schabplatte ist mit einer Schabkante versehen. Damit Schmutz vom Fördergurt abgeschabt werden kann, werden die Kanten der Schabplatten gegen den Fördergurt kräftig angedrückt. Wenn sich im Fördergurt eine schadhafte Stelle befindet, dann wird die Schabkante tief in diese schadhaften Stelle eingedrückt. Beim Austritt aus dieser Schadstelle reisst die Schabkante weitere Bereiche des Gurtmaterials heraus, sodass die Grösse dieser Schadstelle ständig zunimmt, bis der Fördergurt an dieser Stelle bricht.

Die Aufgabe der vorliegenden Erfindung ist, einen Abstreifer vorzuschlagen, welcher den genannten Nachteil der bekannten Abstreifer sowie noch weitere Nachteile dieser nicht aufweist.

Diese Aufgabe wird beim Abstreifer der eingangs genannten Gattung erfindungsgemäss so gelöst, wie dies im kennzeichnenden Teil des Anspruchs 1 definiert ist.

Nachstehend werden Ausführungsformen der vorliegenden Erfindung anhand der beiliegenden Zeichnungen näher erläutert. Es zeigt:
Fig. 1 in einer Frontansicht den vorliegenden Abstreifer,
Fig. 2 in einer Seitenansicht den Abstreifer aus Fig. 1,
Fig. 3 in einer Seitenansicht und vergrössert einen Ausschnitt aus einer Schwenkvorrichtung des Abstreifers,
Fig. 4 in einer Frontansicht eine Trageinrichtung des Abstreifers,
Fig. 5 in einer Seitenansicht die Trageinrichtung aus Fig. 4,
Fig. 6 eine erste Ausführung eines Verbindungsstückes und
Fig. 7 eine zweite Ausführung des Verbindungsstückes.

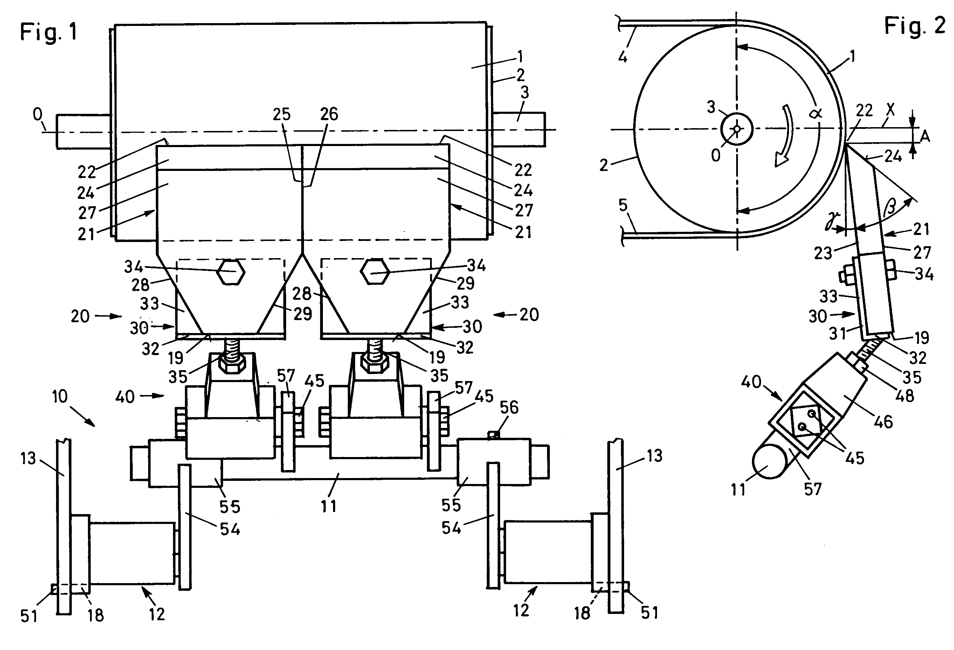

Der vorliegende Abstreifer ist vor allem für Bandförderer bestimmt. Ein Bandförderer weist normalerweise einen Fördergurt 1 auf, welcher über Gurttrommeln 2 umlenkbar ist. In Fig. 1 und 2 ist nur eine der Gurttrommeln 2 dargestellt, wobei diese Gurttrommel 2 zweckmässigerweise die Kopftrommel des Bandförderers ist. Für die nachfolgenden Darlegungen wird hier angenommen, dass die Gurttrommel 2 während des Betriebes des Förderers im Uhrzeigersinn dreht (Fig. 2). Die Gurttrommel 2 weist eine Welle 3 auf, durch welche die Achse 0 der Trommel 2 hindurchgeht. Man kann sich eine horizontale Ebene X (Fig. 2) vorstellen, in welcher die Trommelachse 0 liegt.

Der Fördergurt 1 weist ein Obertrum 4 und ein Untertrum 5 auf. Das Mass der Umschlingung der Gurttrommel 2 durch den Fördergurt 1 kann durch den sogenannten Umschlingungswinkel Alpha der Gurttrommel 2 durch den Fördergurt 1 angegeben sein. Die Grenzen bzw. Enden dieses Winkels Alpha ist durch jene Stellen an der Gurttrommel 2 definiert, an welchen das Obertrum 4 und das Untertrum 5 die Trommel 2 beginnt zu berühren bzw. diese verlassen. Im dargestellten Fall beträgt der Umschlingungswinkel Alpha praktisch 180 Grad.

Der Abstreifer weist eine Trageinrichtung 10 auf, über welche die übrigen Bestandteile des Abstreifers an der Tragkonstruktion (nicht dargestellt) des Bandförderers angebracht ist.

Der Abstreifer weist ferner zumindest einen Schaber 20 auf. Dieser umfasst eine Platte 21, welche zur Einwirkung auf den Fördergurt 1 ausgebildet ist. Die Schabplatte 21 ist vorteilhaft aus Vulkollan (Polyurethan) und sie weist einen im wesentlichen viereckigen Grundriss auf. Eine der Kanten dieser Platte 21 ist als Schabkante 22 geformt, wobei diese Schabkante 22 praktisch senkrecht zur Längsrichtung des Fördergurtes 1 verläuft. Die Schabkante 22 liegt auf dem Fördergurt 1 im mittleren Bereich des Umschlingungswinkels Alpha der Gurttrommel 2 auf. Dabei befindet sich die Schabkante 22 unterhalb der bereits erwähnten horizontalen Ebene X, in welcher die Achse 0 der Gurttrommel 2 liegt. Der Abstand A zwischen der Horizontalebene X und der Schabkante 22 kann beispielsweise 10 mm betragen. Die Grösse dieses Abstandes A ist auch von der Neigung der Tragkonstruktion des Förderers, von der Art des beförderten Guts usw. abhängig.

Im in Fig. 1 dargestellten Fall umfasst der Abstreifer mehr als einen Schaber 20, von welchen nur zwei dargestellt sind. Die Platten 21 der Schaber 20 liegen nebeneinander, wie dies in Fig. 1 gezeigt ist, und sie liegen somit in einer gemeinsamen Ebene. Die schmalen Seitenwände 25 und 26 der benachbarten Schabplatten 21 stehen sich einander gegenüber und der Abstand zwischen diesen Plattenseiten 25 und 26 soll möglichst klein sein. Dieser Abstand darf jedoch nicht so klein sein, dass die sich zugewandten Seitenwände 25 und 26 der benachbarten Schabplatten 21 in Berührung kommen könnten.

Die Schabkante 22 ist einerseits durch eine der Randpartien der dem Fördergurt 1 zugewandten Grundfläche 23 der Schabplatte 21 und andererseits durch die dem Fördergurt 1 zugewandte Randpartie der anliegenden Schmalseite 24 der Schabplatte 21 begrenzt. Der Winkel Beta zwischen der Grundfläche 23 und der genannten Schmalseite 24 ist kleiner als 90 Grad. Dieser Winkel kann zwischen 30 und 80 Grad liegen. Die Tatsache, dass die an der Schabkante 22 angrenzende Platten-Schmalseite 24 gegenüber den Grundflächen 23 und 27 dieser Schabplatte 21 schräg verläuft, hat zur Folge, dass die aussen liegende bzw. vom Fördergurt 1 abgewandte Grundfläche 27 der Schabplatte 21 kleiner ist als die gegenüberliegende Plattengrundfläche 23.

Man kann sich eine vertikale Ebene Y vorstellen, die durch jene Stelle am Fördergurt 1 hindurchgeht, welche durch die Schabkante 22 berührt wird. Die dem Förderband 1 zugewandte Grundfläche 23 der Schabplatte 21 steht unter einem Winkel Gamma zu dieser Vertikalebene Y. Dieser Winkel Gamma ist grösser als Null und er liegt vorteilhaft zwischen 2 und 25 Grad. Die Eckpartien 28 und 29 jener Schmalseite 19 der Schabplatte 21, welche der Platten-Schmalseite 24 mit der Schabkante 22 gegenüberliegt, sind mit je einer Abschrägung versehen.

Der Schaber 20 weist ferner einen Halter 30 für die Schabplatte 21 auf. Jene Partie der Schabplatte 21, welche die Schmalseite 19 mit den Abschrägungen 28 und 29 umfasst, ist an den Plattenträger 30 angeschlossen. Dieser Plattenträger 30 weist einen Plattenhalter 31 auf, welcher einen im wesentlichen L-förmigen Querschnitt hat. Die zuletzt genannte Schmalseite 19 der Schabplatte 21 steht dem kürzeren L-Schenkel 32 des Halters 31 gegenüber oder diese Seite 19 kann auf diesem L-Schenkel 32 sogar aufliegen. Der längere Schenkel 33 des Plattenhalters 31 ist zur Befestigung der Schabplatte 21 ausgebildet. In diesem L-Schenkel 33 sowie im zugeordneten Bereich der Schabplatte 21 sind Bohrungen ausgeführt, welche miteinander fluchten und durch welche eine Schraube 34 zur Befestigung der Schabplatte 21 am Halter 31 hindurchgeht.

Der Plattenträger 30 umfasst ferner einen Bolzen 35, welcher an die Aussenseite des kürzeren L-Schenkels 32 des Plattenhalters 31 angeschlossen ist. Dieser Bolzen 35 ist vorteilhaft als ein Schraubbolzen ausgeführt und er steht zur Oberfläche des kürzeren L-Schenkels 32 des Halters 31 unter einem Winkel, welcher kleiner als 90 Grad ist.

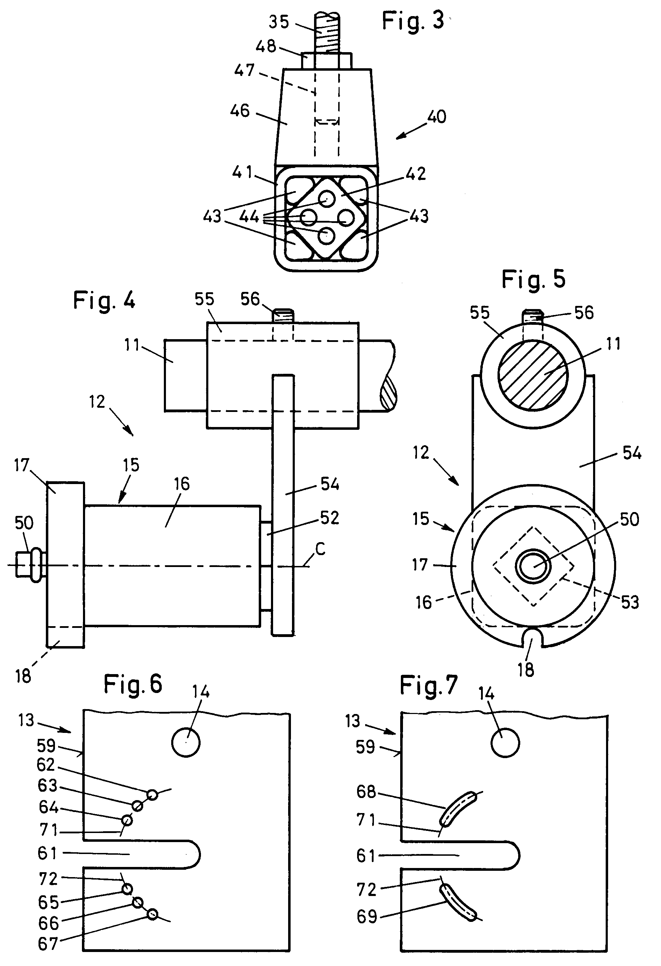

Der Schaber 20 weist schliesslich auch eine Vorrichtung 40 auf, welche eine abgefederte Schwenkbewegung der Schabplatte 21 gegenüber dem Fördergurt 1 ermöglicht. Diese Schwenkvorrichtung 40 ist in Fig. 3 vergrössert dargestellt und sie umfasst eine Hülse 41, deren Querschnitt im wesentlichen quadratisch ist. In dieser Hülse 41 ist eine Welle 42 gelagert, welche ebenfalls einen im wesentlichen quadratischen Querschnitt hat. Die Diagonale dieser Welle 42 ist jedoch kürzer als eine der Seiten der Hülse 41. Im Ruhezustand verläuft die jeweilige Diagonale der Welle 42 parallel zu einer der Seiten bzw. zu einem der Seitenpaare der Hülse 41. In den Eckpartien der Hülse 41 sind längliche Glieder 43 aus einem elastischen Material angeordnet, welche einerseits auf die Innenwände der Eckpartien der Hülse 41 und andererseits auf die Aussenseiten der Welle 42 aufliegen. Diese elastischen Glieder 43 halten die Welle 42 etwa in der Mitte des Hohlraumes in der Hülse 41, wenn die Schwenkvorrichtung 40 nicht belastet ist.

In den Eckpartien der Welle 42 mit einem etwa quadratischen Querchnitt sind parallel zur Achse der Welle 42 verlaufende Bohrungen 44 ausgeführt, welche sich zweckmässigerweise durch die ganze Welle 42 hindurch erstrecken. Die Länge der Welle 42 ist etwas grösser als die Breite der Hülse 41, in der die Welle 42 gelagert ist. Zumindest eine der Endpartien 39 der Welle 42 steht aus der Stirnöffnung der Hülse 41 etwas hervor.

Die Schwenkvorrichtung 40 umfasst ferner eine Büchse 46, deren Boden an die Aussenseite einer der Wände der Hülse 41 befestigt ist. Im dargestellten Fall ist die Büchse 46 mit der Hülse 41 einstückig. Der Hohlraum in der Büchse 46 ist zur Aufnahme des Bolzens 35 des Plattenträgers 30 ausgebildet. Da der Bolzen 35 im dargestellten Fall ein Schraubbolzen ist, ist die Innenwand der Büchse 46 mit einem entsprechenden Gewinde 47 versehen. Die einmal eingestellte Lage des Schraubbolzens 35 gegenüber der Büchse 46 kann mit Hilfe einer auf dem Schraubbolzen 35 aufgeschraubten Mutter 48 sichergestellt werden.

Wie bereits erwähnt worden ist, weist der Abstreifer auch die Trageinrichtung 10 auf, über welche die übrigen Bestandteile des Abstreifers an die Tragkonstruktion des Bandförderers angeschlossen sind. Diese Trageinrichtung 10 umfasst eine Tragstange 11, zwei Spannvorrichtungen 12 sowie Verbindungsstücke 13. In Fig. 4 ist eine der Spannvorrichtungen 12 in einer Frontansicht dargestellt, während Fig. 5 diese Vorrichtung 12 in einer Seitenansicht zeigt.

Die jeweilige Spannvorrichtung 12 umfasst ein Gehäuse 15, welches einen Grundkörper 16 mit einem praktisch viereckförmigen bzw. quadratischen Querschnitt sowie eine Bodenplatte 17 aufweist. Diese Bodenplatte 17 ist mit dem Grundkörper 16 einstückig und sie hat einen kreisförmigen Umriss. Die Diagonale des Grundkörpers 16 ist kleiner als der Durchmesser der Bodenplatte 17, wobei die Bodenplatte 17 zum Grundkörper 16 koaxial angeordnet ist. Dies hat zur Folge, dass eine etwa ringförmige Randpartie der Bodenplatte 17 vom Grundkörper 16 radial absteht. In dieser Randpartie der Bodenplatte 17 ist eine Aussparung 18 ausgeführt, welche sich in radialer Richtung erstreckt und welche sich gegen aussen hin öffnet. Die Aussenseite bzw. die vom Grundkörper 16 abgewandte Seite der Bodenplatte 17 ist mit einer senkrecht von der Aussenseite dieser Bodenplatte 17 abstehenden Achse 50 versehen, welche in der Mitte der Bodenplatte 17 angeordnet ist.

Das Verbindungsstück 13 kann als ein Stück Flach- oder Profileisen ausgeführt sein. Eine der Endpartie dieses Verbindungsstückes 13 ist mit der Tragkonstruktion des Förderers (nicht dargestellt) fest verbunden. In diesem Endbereich des Verbindungsstückes 13 kann wenigstens eine Oeffnung 14 ausgeführt sein. Durch diese Oeffnung 14 kann eine Schraube, oder ähnlich hindurchgehen, mit deren Hilfe das Verbindungsstück 13 an die genannten Tragkonstruktion anschliessbar ist.

Der anderen Endpartie des Verbindungsstückes 13 ist eine der Spannvorrichtungen 12 zugeordnet. In jenem Teil des Verbindungsstückes 13, welcher parallel zur Bodenplatte 17 der Spannvorrichtung 12 verläuft, ist eine erste Oeffnung 61 ausgeführt. Diese Oeffnung 61 kann als eine Bohrung oder als ein Schlitz (Fig. 5 und 6) ausgeführt sein, durch welche bzw. durch welchen die Achse 50 der zugeordneten Spannvorrichtung 12 hindurchgehen kann. Der Durchmesser dieser Oeffnung 61 ist so gewählt, dass die Achse 50 in dieser Oeffnung 61 drehbar ist.

Im dargestellten Fall ist die Oeffnung 61 als ein Schlitz ausgeführt, welcher sich von einer der vertikalen Seitenkanten 59 des Verbindungsstückes 13 in das Innere des Verbindungsstückes 13 hinein erstreckt. Die Längsrichtung dieses Schlitzes 61 kann beim montierten Verbindungsstück 13 der Längsrichtung des Fördergurtes 1 entsprechen. Das offene Ende dieses Schlitzes 61 soll in jener Seite 59 des Verbindungsstückes 13 liegen, welche vom Fördergurt 1 abgewandt liegt. Der Schlitz 61 bietet gegenüber einer Bohrung im Verbindungsstück 13 unter anderem auch den wesentlichen Vorteil, dass man die Achse 50 in die Zentralöffnung 61 auch dann einführen kann, wenn das Verbindungststück 13 an der Tragkonstruktion des Förderers bereits befestigt ist.

In einem Abstand von der Zentralöffnung 61 sind entlang von zwei Kreisbogen 71 und 72 verteilt zusätzliche Bohrungen 62 bis 67 im Verbindungsstück 13 ausgeführt. Das Zentrum dieser Kreisbogen 71 und 72 liegt in der Mitte der Zentralöffnung bzw. in der Mitte des innenliegenden Endes des Schlitzes 61. Der Abstand der zusätzlichen Bohrungen 62 bis 67 von der Zentralöffnung 61 bzw. der Halbmesser der genannten Kreisbogen 71 und 72 entspricht dem Abstand zwischen der Mitte der Achse 50 und der Mitte der Aussparung 18 in der Bodenplatte 17 des Gehäuses 15. Einer der genannten Kreisbogen 71 befindet sich an der einen Seite der Zentralbohrung 61, bzw. oberhalb dieser Zentralbohrung 61, während der andere Kreisbogen 72 sich an der anderen Seite der Zentralbohrung 61, bzw. unterhalb dieser Bohrung 61 befindet. Im dargestellten Fall liegt eine der Gruppen der zusätzlichen Bohrungen 62 bis 64 bzw. der betreffende Kreisbogen 71 an der einen Seiten des Schlitzes 61, während die andere Gruppe der Bohrungen 65 bis 67 bzw. der andere Kreisbogen 72 an der anderen Seite des Schlitzes 61, d.h. unterhalb dieses angeordnet ist. Ausserdem befinden sich diese zusätzlichen Bohrungen 62 bis 67 zwischen der genannten Seitenkante 59 des Verbindungsstückes 13 und dem inneren Ende des Schlitzes 61.

Durch eine der zusätzlichen Bohrungen 61 bis 67 im Verbindungsstück 13 kann ein Stift 51 derart hindurchgesteckt werden, dass sein aus dem Verbindungsstück 13 ragender Abschnitt in der Aussparung 18 der Spannvorrichtung 12 liegt. Dadurch wird eine Drehbewegung des Gehäuses 15 dieser Vorrichtung 12 gegenüber dem Verbindungsstück 13 verhindert. Durch die Wahl einer der Bohrungen 62 bis 67 zum Durchstecken des Stiftes 51 wird die Grösse der Vorspannung der Schaber 20 gegenüber dem Fördergurt 1 gewählt und fixiert.

Bei der Benützung des Verbindungsstückes 13 gemäss Fig. 6 kann das Problem auftreten, dass man die Vorspannung der Schaber 20 nicht fein genug einstellen kann. Bei der Ausführung des Verbindungsstückes 13 gemäss Fig. 7 kann dieses Problem nicht auftreten. Anstelle der vorstehend genannten zusätzlichen Bohrungen 62 bis 67 weist dieses Verbindungsstück 13 Schlitze 68 und 69 auf, welche einen gekrümmten Verlauf aufweisen und von welchen je einer sich entlang einem der genannten Kreisbogen 71 und 72 erstreckt. Es ist eine Schraube (nicht dargestellt) vorgesehen, welche durch einen der Schlitze 68 oder 69 sowie durch die Aussparung 18 im Gehäuse 15 der Vorspannvorrichtung 12 durchgesteckt werden kann. Am freien Ende dieser Schraube wird dann eine Mutter aufgeschraubt. Durch eine Drehung des Gehäuses 12 der Spannvorrichtung 12 um die Achse 50, bis die erforderliche Vorspannung der Schaber 20 erreicht wird, und durch ein darauf folgendes Anziehen der Mutter kann die Lage der Spannvorrichtung 12 gegenüber dem Verbindungsstück 13 an jeder Stelle des betreffenden Schlitzes 68 oder 69 eingestellt und fixiert werden.

Wenn das Verbindungsstück 13 gemäss Fig. 7 ausgebildet ist, dann kann die Aussparung 18 im Gehäuse 15 der Vorspannvorrichtung 12 als ein Gewindeloch ausgeführt sein. Die vorstehend genannten Schraube kann in diesem Fall direkt in die Bodenplatte 17 der Spannvorrichtung 12 eingeschraubt werden, sodass die Verwendung einer Mutter in einem solchen Fall wegfäll.

Im Grundkörper 16 des Gehäuses 15 ist, ähnlich wie bei der Schwenkvorrichtung 40, eine Welle 52 mit einem etwa quadratischen Querschnitt angeordnet, welche aus der offenen Seite des Grundkörpers 16 ragt. Im Inneren des Grundkörpers 16 befinden sich, ebenfalls ähnlich wie in der Hülse 41 der Schwenkvorrichtung 40, längliche elastiche Glieder, welche sich entlang der Welle 52 und entlang der Wand des Grundkörpers 16 erstrecken. Diese Glieder halten die Welle 52 in ihrer Ruhelage. Die Stirnfläche der vom Gehäuse 15 abstehenden Endpartie der Welle 52 ist mit einem Vierkant 53 versehen, welcher mit der Welle 52 koaxial ist. Auf diesem Vierkant 53 sitzt ein Schwenkarm 54 einerends fest. Die andere Endpartie des Schwenkarmes 54 ist mit einem kurzen Rohrstück 55 versehen. Die Achse dieses Rohrstückes 55 verläuft praktisch senkrecht zum Schwenkarm 54 und parallel zur Achse C der Spannvorrichtung 12.

Die bereits erwähnte Tragstange 11 hat einen kreisrunden Querschnitt, wobei der innere Durchmesser des Rohrstückes 55 so gewählt ist, dass die Tragstange 11 durch dieses Rohrstück 55 hindurchgehen kann. Das Rohrstück 55 ist mit einer lösbaren Feststellvorrichtung 56 versehen, welche verhindern kann, dass die Tragstange 11 im Rohrstück 55 dreht. Diese Feststellvorrichtung 56 ermöglicht eine Verstellung der Lage der Tragstange 11 gegenüber dem Rohrstück 55 und somit auch gegenüber der Spannvorichtung 12 und der Tragkonstruktion des Förderers. Die Feststellvorrichtung 56 kann eine Schraube mit einem geeigneten Durchmesser des Schraubbolzens aufweisen, welche im Rohrstück 55 eingeschraubt ist und deren Spitze auf der Tragstange 11 aufliegen kann.

Die Spannvorrichtungen 12 sind hinsichtlich der Tragstange 11 so angeordnet, dass jeweils eine der Endpartien der Tragstange 11 durch das Rohrstück 55 einer der Spannvorrichtungen 12 hindurchgeht. Der zwischen den Rohrstücken 55 liegende Abschnitt der Tragstange 11 ist mit Anschlussstücken 57 versehen. Diese Anschlusstücke 57 sind als steife Materialstreifen ausgeführt, welche einerends mit der Tragstange 11 fest verbunden sind. Sie stehen von der Tragstange 11 radial ab und sie weisen in derselben Richtung, sodass sie eine Reihe bilden.

Im jeweiligen Anschlusstück 57 sind zwei Bohrungen ausgeführt, deren Durchmesser und deren Abstand voneinander dem Durchmesser und dem Abstand zweier in der Welle 42 der Schwenkvorrichtung 40 diagonal zueinander liegenden Bohrungen 44 entspricht. Eine der Schwenkvorrichtungen 40 ist einem der Anschlusstücke 57 zugeordnet. Diese Zuordnung erfolgt in der Weise, dass eines der Anschlusstücke 57 an der Tragstange 11 der Stirnfläche der aus der Hülse 41 ragenden Endpartie 39 der Welle 42 zugeordnet ist, und zwar derart, dass Schrauben 45 sowohl durch die Bohrungen 44 in der Welle 42 als auch im Anschlusstück 57 hindurchgehen, wodurch die Welle 42 mit dem Anschlusstuck 57 und somit auch mit der Tragstange 11 fest verbunden wird.

Der Abstand zwischen den benachbarten an der Tragstange angebrachten Anschlusstücken 57 ist so gewählt, dass die Schabplatten 21 der einzelnen Schaber 20 dicht aneinander angeordnet sind.

Mit Hilfe der Feststellvorrichtungen 56 an den Rohrstücken 55 kann der Winkel Gamma der Schabplatte 21 gegenüber der vertikalen Ebene Y gewählt und eingestellt werden. Dies deswegen, weil die Schaber 20 um die Tragstange 11 schwenkbar sind.

Eine Grundvorspannung für alle Schaber 20 gegenüber dem Fördergurt 1 wird mit Hilfe der Spannvorrichtungen 12 in der Trageinrichtung 10 eingesteellt. Dies geschieht in der Weise, dass zunächst jene der zusätzlichen Bohrungen im Verbindungsstück bzw. in den Verbindungsstücken 13 ausgewählt wird, bei deren Benützung die Spannvorrichtungen 12 die gewünschte Grösse des Anpressdruckes liefern können. Dann dreht man das Gehäuse 15 der jeweiligen Spannvorrichtung 12, bis die Aussparung 18 im Gehäuse 15 mit dieser zusätzlichen Bohrung fluchtet. Hiernach steckt man den Stift 51 durch diese zusätzliche Bohrung im Verbindungsstück 13 sowie durch die Aussparung 18 im Gehäuse 15 der Spannvorrichtung 12 hindurch, wodurch die Lage des jeweiligen Gehäuses 15 gegenüber dem betreffenden Verbindungsstück 13 fixiert und die Vorspannung der an der Tragstange 11 angebrachten Schaber 20 eingestellt ist.

Wenn während des Betriebes des Förderers Schmutz auf dem Fördergurt 1 so fest haftet, dass der Schmutzfleck durch den betreffenden Schaber 20 nicht weggeschabt werden kann, dann rutsch dieser Schmutzfleck unter dem Schaber 20 hindurch. Dabei wird dieser Schaber 20 angehoben, d.h. vom Fördergurt 1 weggeschwenkt. Diese Schwenkbewegung eines oder mehrerer Schaber 20 unabhängig von den übrigen Schaber 20 ist deswegen möglich, weil der jeweilige Schaber 20 über seine eigene Schwenkvorrichtung 40 an die gemeinsame Tragstange 11 angeschlossen ist. Ein vorübergehendes Wegschwenken eines der Schaber 20 hat somit keinen Einfluss auf die Wirkungsweise der übrigen Schaber 20 dieses Abstreifers.

Wenn eine schadhafte Stelle am Fördergurt 1 in den Bereich des vorliegenden Abstreifers gelangt, dann dringen die Schabkante bzw. die Schabkanten 22 der Schaber 20 nicht tief in diese Schadstelle. Dies deswegen, weil die Unterseite 23 der Schabplatte 21 beinahe tangential zu jener Stelle am Fördergurt 1 steht, an der die Schabkante 22 auf dem Fördergurt 1 aufliegt. Die Schabkante 22 kann folglich nicht in die schadhafte Stelle im Fördergurt 1 tief eindringen und sie kann diese schadhafte Stelle somit nicht oder zumindest nicht wesentlich noch weiter beschädigen.

## Patentansprüche

1. Abstreifer für einen Bandförderer, dessen Fördergurt (1) über Gurttrommeln (2) umlenkbar ist, wobei die Umschlingung der Gurttrommel durch einen Umschlingungswinkel definiert ist, mit zumindest einem am Fördergurt anliegenden Schaber (20), dessen Schabkante (22) praktisch quer zur Längsrichtung des Fördergurtes verläuft, daduch gekennzeichnet, dass die Schabkante (22) im mittleren Bereich des Umschlingungswinkels der Gurttrommel (2) angeordnet ist.

2. Abstreifer nach Anspruch 1, dadurch gekennzeichnet, dass die Schabkante (22) sich unterhalb einer horizontalen Ebene (X) befindet, in welcher die Achse (0) der Gurttrommel (2) liegt, und dass der Abstand (A) zwischen dieser Horizontalebene (X) und der Schabkante (22) beispielsweise 10 mm betragen kann.

3. Abstreifer nach Anspruch 1, dadurch gekennzeichnet, dass der Schaber (20) eine Platte (21) aufweist, dass eine der Kanten (22) dieser Platte (21) als Schabkante ausgebildet ist, dass der Winkel Beta zwischen jenen Wänden (23,24) der Platte (21), welche die Schabkante (22) begrenzen, kleiner als 90 Grad ist, dass die dem Fördergurt (1) zugewandte Plattenwand (23), welche zugleich eine der die Schabkante (22) definierenden Plattenwände ist, unter einem Winkel Gamma zu einer vertikalen Ebene (Y) steht, welche durch jene Stelle am Fördergurt (1) hindurchgeht, die durch die Schabkante (22) berührt wird, und dass der Winkel Gamma grösser als Null ist.

4. Abstreifer nach Anspruch 3, dadurch gekennzeichnet, dass der Schaber (20) ferner einen Träger (30) für die Schabplatte (21) aufweist, dass jene Partie der Schabplatte (21), welche zur Schabkante (22) gegenüberliegt, an den Träger (30) angeschlossen ist, dass der Schaber auch eine Vorrichtung (40) aufweist, welche eine Schwenkbewegung der Schabplatte (21) hinsichtlich des Fördegurtes (1) ermöglicht, und dass der Schaber (1) über diese Schwenkvorrichtung (40) an die Tragkonstruktion des Förderers anschliessbar ist.

5. Abstreifer nach Anspruch 3, dadurch gekennzeichnet, dass die Schabplatte (21) im wesentlichen eine viereckige Platte ist, dass eine der Schmalseiten (24) dieser Platte (21) mit der Schabkante (22) versehen ist, dass die Eckpartien (28,29) der gegenüberliegenden Schmalseite (19) der Platte (21) vorteilhaft abgeschrägt sind, dass diese Partie (19) der Platte an den Plattenträger (30) angeschlossen ist und dass die Schabplatte (21) vorteilhaft aus Vulkollan (Polyurethan) ist.

6. Abstreifer nach Anspruch 5, dadurch gekennzeichnet, dass der Plattenträger (30) einen Plattenhalter (31) aufweist, welcher einen im wesentlichen L-förmigen Querschnitt aufweist, dass der längere Schenkel (33) des Plattenhalters (31) zur Halterung der Schabplatte (21) ausgebildet ist, dass ein Bolzen (35) an die Aussenseite des kürzeren L-Schenkels (32) des Plattenhalters angeschlossen ist, dass dieser Bolzen (35) vorteilhaft als ein Schraubbolzen ausgeführt ist, und dass die freie Partie des Bolzens (35) in eine Schwenkvorrichtung (40) des Schabers (20) eingreift.

7. Abstreifer nach Anspruch 6, dadurch gekennzeichnet, dass die Schwenkvorrichtung (40) des Schabers (20) eine Hülse (41) umfasst, deren Querschnitt im wesentlichen quadratisch ist, dass elastische Glieder (43) in den Eckpartien dieser Hülse angeordnet sind, dass eine Welle (42) mit einem im wesentlichen quadratischen Querschnitt durch die Hülse (41) so hindurchgeht, dass sie durch die elastischen Glieder (43) etwa in der Mitte des Hohlraumes in der Hülse (41) gehalten ist, dass zumindest eine der Endpartien (39) dieser Welle (42) an einem Stück (57) befestigt ist, welches seinerseits an die Tragkonstruktion des Förderers anschliessbar ist, dass die Schwenkvorrichtung (40) ferner eine Büchse (46) umfasst, welche mit ihrer geschlossenen Endpartie an der Aussenseite einer der Wände der Hülse (41) befestigt ist, und dass die Innenseite der offenen Partie dieser Büchse (46) zur Aufnahme des Bolzens (35) des Plattenträgers (30) ausgebildet ist.

8. Abstreifer nach Anspruch 4, welcher mehr als einen Schaber aufweist, dadurch gekennzeichnet, dass die Schaber (20) nebeneinander bzw. in einer Ebene liegen und dass der Abstand zwischen den Platten (21) von zwei benachbarten Schabern möglichst klein ist, wobei sich die Seitenwände (25,26) der Platten (21) der benachbarten Schaber (20) jedoch nicht berühren.

9. Abstreifer nach den Ansprüchen 3 oder 8, dadurch gekennzeichnet, dass eine Trageinrichtung (10) für den bzw. die Schaber (20) vorgesehen ist, dass diese Trageinrichtung (10) eine Tragstange (11) umfasst, an welcher die Schaber (20) angebracht sind, dass die Trageinrichtung (10) ferner Spannvorrichtungen (12) zur Erzeugung einer Vorspannung der Schaber (20) gegen den Fördergurt (1) sowie Verbindungsstücke (13) umfasst, dass der jeweiligen Spannvorrichtung (12) eines der Verbindungsstücke (13) zugeordnet ist und dass die Spannvorrichtungen (12) über die Verbindungsstücke (13) an die Tragkonstruktion des Förderers anschliessbar sind.

10. Abstreifer nach Anspruch 9, dadurch gekennzeichnet, dass der mittlere Bereich der Tragstange (11) mit Anschlusstücken (57) versehen ist, dass diese Anschlusstücke (57) als steife Materialstreifen ausgeführt sind, welche mit der Tragstange (11) einerends fest verbunden sind und welche von der Tragstange (11) radial abstehen, dass im jeweiligen Anschlusstück (57) zwei Bohrungen ausgeführt sind, durch welche Schrauben (45) hindurchgehen, welche auch durch die Welle (42) der Schwenkvorrichtung (40) hindurchgehen, und dass der Abstand zwischen den benachbarten an der Tragstange (11) angebrachten Anschlusstücken (57) so gewählt ist, dass die Schabplatten (21) dicht nebeneinander angeordnet sind.

11. Abstreifer nach Anspruch 9, dadurch gekennzeichnet, dass das Verbindungsstück (13) einerends, beispielsweise mit Hilfe einer Oeffnung (14), an die Tragkonstruktion des Förderers anschliessbar ist, dass die gegenüberliegende Partie dieses Stückes (13) mit einer ersten bzw. mittigen Oeffnung (61) versehen ist und dass in einem Abstand von dieser zentralen Oeffnung (61) zusätzliche Oeffnungen, vorteilhaft Bohrungen (62 bis 67) oder gekrümmte Schlitze (68,69) im Verbindungsstück (13) ausgeführt sind.

12. Abstreifer nach Anspruch 11, dadurch gekennzeichnet, dass die jeweilige Spannvorrichtung (12) ein Gehäuse (15) umfasst, welches einen Grundkörper (16) mit einem praktisch viereckförmigen bzw. quadratischen Querschnitt sowie eine Bodenplatte (17) aufweist, dass in einer Randpartie der Bodenplatte (17) eine Aussparung (18) ausgeführt ist, dass die Aussenseite der Bodenplatte (17) mit einer senkrecht von dieser abstehenden Achse (50) versehen ist, welche in der zentralen Oeffnung des Verbindungsstückes (13) Platz findet, dass im Grundkörper (16) des Gehäuses (15) eine Welle (52) mit einem etwa quadratischen Querschnitt angeordnet ist, welche aus der offenen Seite des Grundkörpers (16) ragt, dass im Inneren des Grundkörpers (16) sich längliche elastiche Glieder zwischen der Welle (52) und der Innenwand des Grundkörpers (16) erstrecken, dass an die Stirnfläche der vom Gehäuse (15) abstehenden Endpartie der Welle (52) ein Schwenkarm (54) einerends befestigt ist, dass die andere Endpartie dieses Schwenkarms (54) mit einem Rohrstück (55) versehen ist und dass eine der Endpartien der Tragstange (11) durch dieses Rohrstück (55) hindurchgeht.
